# EUROPÄISCHE PATENTANMELDUNG

(11) **EP 4 274 067 A1**
(43) Veröffentlichungstag der Anmeldung: **08.11.2023**
(21) Anmeldenummer: 22171686.3
(22) Anmeldetag: 04.05.2022
(51) Int. Cl.: H02K 5/15, H02K 7/00, H02K 7/08, H02K 7/14, H02K 9/06, A01D 34/00, F16D 1/02

(54) **ARBEITSGERÄT**

(71) Anmelder: Andreas Stihl AG & Co. KG, 71336 Waiblingen (DE)
(72) Erfinder: Ehrler, Denis, 73249 Wernau (DE); Maier, Matthias, 71334 Waiblingen (DE); Angelusch, Anton, 71336 Waiblingen (DE)
(74) Vertreter: Karzel, Philipp

(57) **Zusammenfassung**

Die Erfindung betrifft ein Arbeitsgerät, umfassend ein Gehäuse (2), einen im Gehäuse (2) angeordneten Elektromotor (3), wobei der Elektromotor (3) eine um eine Rotorachse (5) drehend angetriebene Rotorwelle (4) umfasst, eine Abtriebswelle (10) zum Antreiben eines Werkzeugs, wobei die Abtriebswelle (10) an einer Aufnahme (6) der Rotorwelle (4) mit der Rotorwelle (4) formschlüssig verbunden ist und einen am Gehäuse (2) abgestützten Flansch (8). Die Rotorwelle (4) ist über eine im Flansch (8) angeordnete Rotorwellenlagerung (9) drehbar gelagert, wobei sich die Rotorwellenlagerung (9) in Richtung der Rotorachse (5) entlang eines Lagerungsabschnittes (18) erstreckt, und dass sich die Abtriebswelle (10) mindestens bis in den Lagerungsabschnitt (18) der Rotorwellenlagerung (9) erstreckt.

## Beschreibung

Die Erfindung betrifft ein Arbeitsgerät gemäß dem Oberbegriff des Anspruchs 1.

Aus dem Stand der Technik sind Arbeitsgeräte bekannt, die ein Gehäuse sowie einen im Gehäuse angeordneten Elektromotor umfassen. Der Elektromotor umfasst eine um eine Drehachse drehend angetriebene Rotorwelle. Über eine Abtriebswelle, die mit der Rotorwelle verbunden ist, wird ein Werkzeug des Arbeitsgeräts angetrieben. Als Antriebsmotor kommen herkömmliche Elektromotoren zum Einsatz, deren Rotor durch eine Fest-Los Lagerung in einem Motorgehäuse gelagert sind. Das Motorgehäuse nimmt ebenfalls den Stator auf und lagert Rotor und Stator zueinander. Durch diese Bauweise ist der Elektromotor in sich gelagert und lässt sich einfach als Einheit montieren. Das Motorgehäuse wird hierbei üblicherweise mit oder ohne Vibrationsdämpfungselementen an einem Flansch befestigt, so dass der Elektromotor einfach getauscht werden kann, in dem lediglich das Motorgehäuse vom Flansch abgeschraubt wird. Nachteilig an derartigen Geräten ist, dass herkömmliche Elektromotoren einen erhöhten Bauraum im Gehäuse des Arbeitsgerätes einnehmen. Im Betrieb derartiger Geräte hat sich dies als besonders nachteilig hinsichtlich der Gewichtsverlagerung des gesamten Antriebssystems inklusive des Akkus herausgestellt.

Der Erfindung liegt die Aufgabe zugrunde, ein Arbeitsgerät mit einer kompakten Bauform mit einer optimierten Gewichtsverteilung anzugeben.

Diese Aufgabe wird durch ein Arbeitsgerät gemäß dem Anspruch 1 gelöst.

Das erfindungsgemäße Arbeitsgerät umfasst, ein Gehäuse, einen im Gehäuse angeordneten Elektromotor, wobei der Elektromotor eine um eine Rotorachse drehend angetriebene Rotorwelle umfasst, eine Abtriebswelle zum Antreiben eines Werkzeugs, wobei die Abtriebswelle an einer Aufnahme der Rotorwelle mit der Rotorwelle formschlüssig verbunden ist, einen am Gehäuse abgestützten Flansch. Der Flansch umschließt das motorseitige Ende der Abtriebswelle. Die Rotorwelle ist über eine im Flansch angeordnete Rotorwellenlagerung drehbar gelagert. Die Rotorwellenlagerung bezeichnet die Gesamtheit der Lagerstellen, durch welche die Rotorwelle vollständig gelagert wird. Die Rotorwellenlagerung erstreckt sich in Richtung der Rotorachse entlang eines Lagerungsabschnittes. Die Abtriebswelle erstreckt sich mindestens bis in den Lagerungsabschnitt der Rotorwellenlagerung.

Dadurch, dass sich die Abtriebswelle in den Lagerungsabschnitt hinein erstreckt, kann eine aufgrund der Lagerungssituation der Rotorwelle erforderliche Baulänge der Rotorwelle zusätzlich genutzt werden, um eine ebenfalls erforderliche Mindestlänge einer Überlappung der Abtriebswelle mit der Rotorwelle bereitzustellen. Dadurch ist eine Reduktion der axialen Baulänge der Flansch-Elektromotor-Einheit möglich, was zu einem kompakteren Gehäuse und einer besseren Ergonomie führt. Durch die Reduktion der axialen Baulänge der Flansch-Elektromotor-Einheit lässt sich ein Abstand zwischen dem Akkupack und dem werkzeugnahen Ende des Flansches minimieren.

Die Aufnahme der Rotorwelle ist insbesondere als stirnseitige Öffnung der Rotorwelle ausgebildet, in welche die Abtriebswelle mit ihrem motornahen Ende ragt.

Dem Flansch des Arbeitsgerätes kommt somit eine Doppelfunktion zu. Zum einen sind innerhalb des Flansches die Abtriebswelle und die Rotorwelle des Elektromotors über die Aufnahme der Rotorwelle verbunden. Zum anderen ist der Rotor über die Rotorwelle, insbesondere vollständig durch die Rotorwellenlagerung gelagert. Die Rotorwellenlagerung ist insbesondere vollständig im Flansch angeordnet. Insbesondere ist am Flansch eine Abstützung für den Stator vorgesehen, so dass Rotor und Stator durch den Flansch zueinander ausgerichtet sind. Auf eine herkömmliche Lagerung des Elektromotors kann verzichtet werden. Somit ist das Arbeitsgerät sehr kompakt ausgebildet. Die Gewichtsverteilung konzentriert sich im Bereich des Elektromotors, wodurch sich der Tragekomfort für den Bediener erhöht.

Es ist vorteilhaft vorgesehen, dass sich der Lagerungsabschnitt in Richtung der Rotorachse über eine Länge erstreckt, wobei die Abtriebswelle den Lagerungsabschnitt in Richtung der Rotorachse um mindestens 20% der Länge des Lagerungsabschnittes überlappt. Vorzugsweise befindet sich das Ende der Abtriebswelle in Richtung der Rotorachse in der Rotorwellenlagerung. Vorzugsweise ist auch die Aufnahme der Rotorwelle in Richtung der Rotorachse in der Rotorwellenlagerung ausgebildet. Somit ist der Bereich der maximalen Drehmomentübertragung von der Rotorwelle auf die Abtriebswelle durch die Rotorwellenlagerung versteift.

Es ist vorteilhaft vorgesehen, dass die Aufnahme einteilig mit der Rotorwelle ausgebildet ist. Besonders bevorzugt ist die Aufnahme der Rotorwelle Teil einer Polygonverbindung. Somit kann auf weitere Verbindungselemente zur Verbindung von Abtriebswelle und Rotorwelle verzichtet werden.

Die Rotorwellenlagerung ist bevorzugt als eine fliegende Lagerung ausgebildet. Dadurch ist der Elektromotor kompakt aufgebaut. Es ist bevorzugt vorgesehen, dass die Rotorwellenlagerung ein erstes Lager und ein zweites Lager umfasst. Das erste Lager und das zweite Lager sind in einem Abstand zueinander angeordnet. Die Lager sind vorteilhaft in Form einer Spielpassung auf der Rotorwelle gehalten. Die Spielpassung ermöglicht es, die Rotorwelle auf einfache Weise in die Rotorwellenlagerung zu schieben. Zwischen den Lagern der Rotorwellenlagerung und der Rotorwelle ist bevorzugt ein O-Ring angeordnet. Der O-Ring liegt vorzugsweise in einer in der Rotorwelle ausgebildeten Nut. Ist die Rotorwelle in die Rotorwellenlagerung eingeschoben, kontaktiert der O-Ring die Lagerinnenringe. Somit bildet der O-Ring einen reibkraftschlüssigen Mitnehmer zwischen der Rotorwelle und den Lagerinnenringen. Relativbewegungen zwischen der Rotorwelle und den Lagerinnenringen werden vermieden. Folglich kann auch Passungsrost an den Lagersitzen vermieden werden. Die Lager sind bevorzugt als Wälzlager, insbesondere als Kugellager ausgebildet.

Es ist vorteilhaft vorgesehen, dass sich die Rotorwelle von einem ersten Ende bis zu einem zweiten Ende erstreckt, wobei die Aufnahme an dem ersten Ende der Rotorwelle ausgebildet ist. Bevorzugt ist über einen Befestigungsabschnitt der Rotorwelle ein Dauermagnet als Teil eines Rotors des Elektromotors auf der Rotorwelle angeordnet, wobei die Rotorwellenlagerung in Richtung der Rotorachse bevorzugt zwischen dem ersten Ende der Rotorwelle und dem Befestigungsabschnitt der Rotorwelle angeordnet ist. Der Dauermagnet kann unmittelbar am Befestigungsabschnitt der Rotorwelle angeordnet sein. In einer alternativen Ausführung kann es vorgesehen sein, dass der Dauermagnet lediglich mittelbar über den Befestigungsabschnitt der Rotorwelle an der Rotorwelle befestigt ist. Am zweiten Ende der Rotorwelle ist bevorzugt ein Lüfterrad angeordnet. Somit kann ein Kühlluftstrom angesaugt werden, der durch den Elektromotor strömt und diesen kühlt.

Besonders vorteilhaft ist ein Lüftergehäuse an dem Flansch befestigt, wobei das Lüftergehäuse den Lüfter umgibt. Vorzugsweise umfasst der Elektromotor einen Stator, wobei der Stator über den Flansch am Gehäuse abgestützt ist. Der Stator ist mit dem Flansch bevorzugt starr verbunden. Der Flansch ist bevorzugt über eine Halteschelle am Gehäuse befestigt. Zwischen dem Flansch und der Halteschelle ist vorteilhaft mindestens ein Dämpferelement vorgesehen. Somit sind der Flansch selbst, wie auch der Stator, der Rotor und / oder das Lüftergehäuse vom Gehäuse schwingungsentkoppelt.

Weitere Merkmale der Erfindung ergeben sich aus der Beschreibung und der Zeichnung. Nachstehend ist ein im Einzelnen beschriebenes Ausführungsbeispiel wiedergegeben. Es zeigen:
- Fig. 1: eine perspektivische Darstellung eines als Freischneider ausgebildeten Arbeitsgerätes,
- Fig. 2: eine ausschnittsweise Schnittdarstellung des Arbeitsgerätes, insbesondere des Antriebsmotors als Innenläufer und der Abtriebswelle, ohne den vorderen Teil des Gehäuses,
- Fig. 3: eine perspektivische Explosionsdarstellung des Antriebsmotors mit Gehäuseanbindung,
- Fig. 4: eine perspektivische Darstellung des Antriebsmotors mit Gehäuseanbindung und
- Fig. 5: eine ausschnittsweise Schnittdarstellung des Arbeitsgerätes, insbesondere des Antriebsmotors als Außenläufer und der Abtriebswelle, ohne den vorderen Teil des Gehäuses.

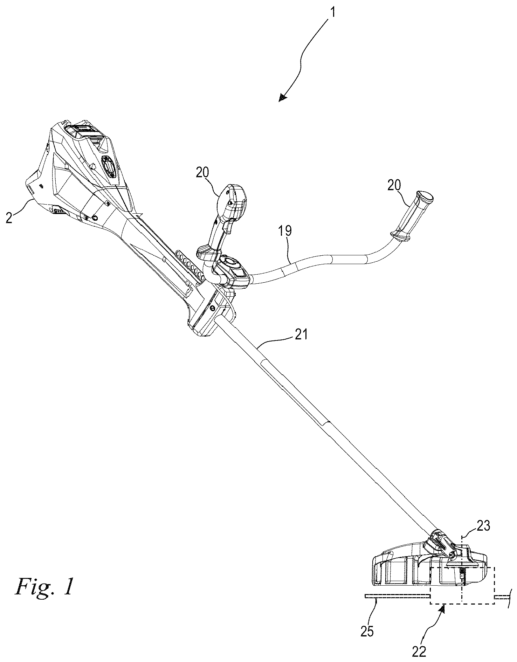

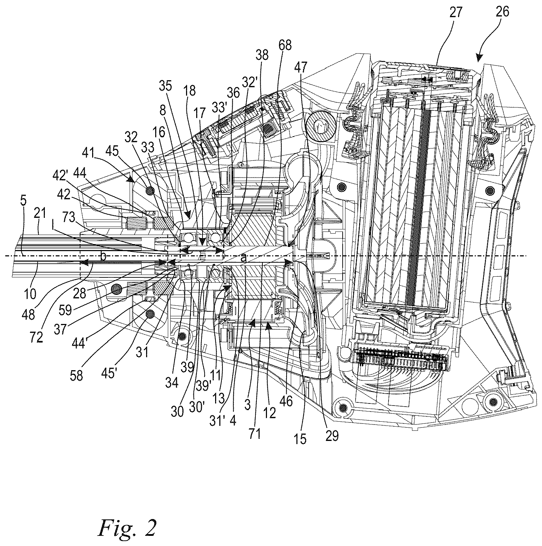

Fig. 1 zeigt ein Arbeitsgerät 1, das als ein Freischneider ausgebildet ist. Das Arbeitsgerät 1 ist bevorzugt ein handgeführtes, insbesondere ein handgetragenes Arbeitsgerät. Insbesondere ist das Arbeitsgerät 1 als Schaftgerät ausgeführt. Ein Schaftgerät umfasst einen Schaft 21, an dessen einem Ende ein Werkzeug 25 des Arbeitsgerätes 1 angeordnet ist und an dessen anderen Ende ein Gehäuse 2 angeordnet ist, mit dem sich insbesondere eine Energieversorgungseinheit für einen Antrieb des Arbeitsgerätes 1 koppeln lässt. Der Schaft 21 bildet somit ein Führungsrohr des Arbeitsgerätes 1. Handgetragen ist derart zu verstehen, dass im bestimmungsgemäßen Betrieb des Arbeitsgerätes der Bediener das Arbeitsgerät trägt. Das Arbeitsgerät 1 kann insbesondere auch als Hochentaster oder dergleichen Arbeitsgerät ausgebildet sein. An dem Gehäuse 2 ist ein als Elektromotor 3 ausgebildeter Antriebsmotor angeordnet (Fig. 2). Durch den Schaft 21 ragt eine von dem im Gehäuse 2 angeordneten Elektromotor 3 angetriebene Abtriebswelle 10, die mit dem Mähkopf 22 wirkverbunden ist und den Mähkopf 22 um eine Drehachse 23 rotierend antreibt. Der Antrieb des Mähkopfes 22 kann hierbei direkt durch die Abtriebswelle 10 oder zwischengeschaltete Einheiten, wie insbesondere ein Getriebe, erfolgen. Der Fadenmähkopf 22 ist beim Betrieb an der dem Bediener zugewandten Seite von einer Schutzhaube 24 abgedeckt. Der Mähkopf 5 besitzt mindestens ein Schneidwerkzeug 25, das zum Schneiden von Schnittgut wie Gras, Gestrüpp oder dergleichen dient. Zum Führen des Arbeitsgeräts 1 im Betrieb sind Handgriffe 20 vorgesehen, die im Ausführungsbeispiel an einem Grifflenker 19 angeordnet sind. Der Grifflenker 19 ist am Gehäuse 2 des Arbeitsgerätes 1 befestigt. Das Gehäuse 2 ist über Dämpfungselemente mit dem Schaft 21 verbunden.

Wie in Fig. 2 gezeigt, ist an dem Gehäuse 2 ein Akkuschacht 26 ausgebildet, in dem ein Akku 27 aufgenommen ist. Der Akku 27 dient zur Energieversorgung des Elektromotors 3. Der Elektromotor 3 umfasst einen Rotor 11 und einen Stator 12. Der Rotor 11 umfasst eine Rotorwelle 4 mit einer Rotorachse 5. Die Rotorwelle 4 erstreckt sich entlang ihrer Rotorachse 5 von einem ersten Ende 28 bis zu einem zweiten Ende 29. Die Rotorwelle 4 umfasst eine Aufnahme 6. Die Aufnahme 6 der Rotorwelle 4 dient zur Befestigung, insbesondere zur formschlüssigen Befestigung der Abtriebswelle 10 des Arbeitsgerätes 1. Die Aufnahme 6 ist an dem ersten Ende 28 der Rotorwelle 4 angeordnet. Die Abtriebswelle 10 und die Rotorwelle 4 sind in Drehrichtung der Rotorwelle 4 drehfest miteinander verbunden. Die Abtriebswelle 10 und die Rotorwelle 4 sind bevorzugt über eine Polygonverbindung miteinander verbunden, wobei in einer solchen Ausführung des Arbeitsgerätes 1 die Aufnahme 6 der Rotorwelle 4 Teil der Polygonverbindung ist.

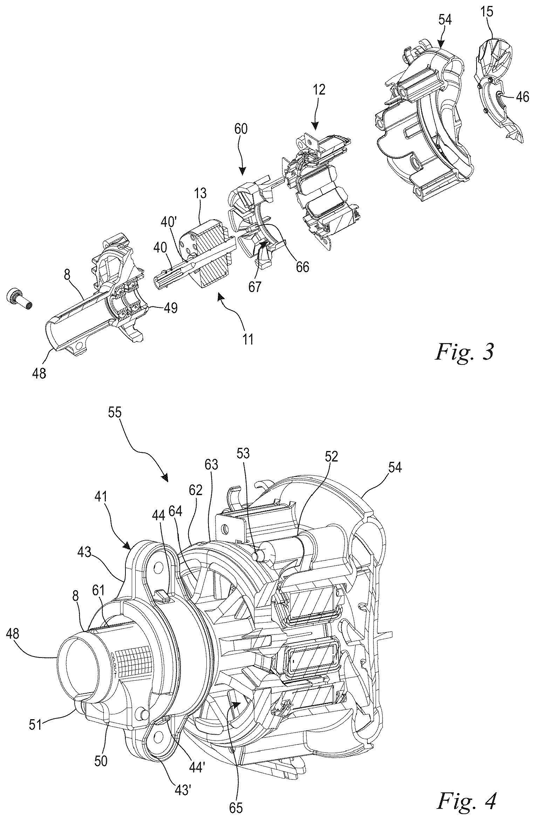

Wie in Fig. 2 gezeigt, ist an dem zweiten Ende 29 der Rotorwelle 4 ein Lüfterrad 15 angeordnet. Das Lüfterrad 15 dient dazu, im Betrieb des Arbeitsgerätes 1 einen Kühlluftstrom zu erzeugen, der den Elektromotor 3 durchströmt und diesen kühlt. Das Lüfterrad 15 ist drehfest mit der Rotorwelle 4 verbunden. Im bevorzugten Ausführungsbeispiel ist das Lüfterrad 15 in Drehrichtung der Rotorwelle 4 formschlüssig, insbesondere über eine Nut-Feder-Verbindung 46 (Fig. 3) auf der Rotorwelle 4 befestigt. In Richtung der Rotorachse 5 ist das Lüfterrad 15 über einen Sicherungsring 47 auf der Rotorwelle 4 gehalten.

Wie in Fig. 2 gezeigt, ist der Rotor 11 um die Rotorachse 5 drehbar gelagert. Der Rotor 11 umfasst einen Dauermagneten 13, der vorzugsweise unmittelbar auf einem Befestigungsabschnitt 68 der Rotorwelle 5 angeordnet ist. Der Dauermagnet 13 ist vorzugsweise auf der Rotorwelle 5 aufgepresst. Der Stator 12 umfasst eine Vielzahl von Spulen 14. Die Spulen 14 sind jeweils um einen Eisenkern gewickelt und umgeben den Rotor 11, insbesondere den Dauermagneten 13 des Rotors 11 radial zur Rotorachse 5. Der Stator 12 ist mit dem Gehäuse 2 drehsicher verbunden. Der Rotor 11 ist gegenüber dem Gehäuse 2 drehbar gelagert. Werden die Spulen 14 des Stators 12 bestromt, entsteht ein Magnetfeld, dass mit dem Magnetfeld des Rotors 11, insbesondere mit dem Magnetfeld des Dauermagneten 13, derart in Wechselwirkung tritt, dass sich der Rotor 11 dreht. Die elektrische Arbeit wird in mechanische Arbeit umgewandelt.

Wie in Fig. 2 gezeigt, ist der Rotor 11 mittels einer Rotorwellenlagerung 9 gelagert. Die Rotorwellenlagerung 9 umfasst ein erstes Lager 16 und ein zweites Lager 17. Die Rotorwellenlagerung 9 erstreckt sich entlang der Rotorachse 5 über einen Lagerungsabschnitt 18. Das erste Lager 16 und das zweite Lager 17 umfassen jeweils eine Lagerinnenseite 30, 30', die einander zugewandt angeordnet sind. Das erste Lager 16 und das zweite Lager 17 umfassen jeweils eine Lageraußenseite 31, 31', die einander abgewandt angeordnet sind. Der Lagerungsabschnitt 18 erstreckt sich von der Lageraußenseite 31 des ersten Lagers 16 bis hin zur Lageraußenseite 31' des zweiten Lagers 17. Der Lagerungsabschnitt 18 erstreckt sich in Richtung der Rotorachse 5 über eine Länge 1. Die Rotorwellenlagerung 9 ist bezüglich des Rotors 11 als eine fliegende Lagerung ausgebildet. Eine fliegende Lagerung zeichnet sich dadurch aus, dass die von den Lagern aufzunehmenden Kräfte nicht zwischen den Lagern, sondern außerhalb des Lagerungsabschnittes 18 eingeleitet werden. Der Befestigungsabschnitt 68 ist axial abseits des Lagerungsabschnittes 18 vorgesehen. Im bevorzugten Ausführungsbeispiel gemäß Figur 2 ist der Dauermagnet 13 des Rotors 11 außerhalb des Lagerungsabschnittes 18 angeordnet. Die Rotorwellenlagerung 9 ist in Richtung der Rotorachse 5 zwischen dem ersten Ende 28 der Rotorwelle 4 und dem Dauermagneten 13 angeordnet.

Wie in Fig. 2 gezeigt, umfasst das Arbeitsgerät 1 einen Flansch 8. Der Elektromotor 3 ist über den Flansch 8 an dem Gehäuse 2 des Arbeitsgerätes 1 gehalten. Der Rotor 11 und der Stator 12 des Elektromotors 3 sind an jeweils unterschiedlichen Stellen des Flansches 8 mit dem Flansch 8 verbunden. Es existiert kein separates Motorgehäuse, dass den Rotor 11 und den Stator 12 zueinander lagert und als in sich gelagerte Einheit mit dem Flansch 8 verbindet. Vielmehr stellt der Flansch 8 ein integrales Motorgehäuse dar. Im bevorzugten Ausführungsbeispiel des Arbeitsgerätes 1 ist eine Halteschelle 41 vorgesehen, die den Flansch 8 am Gehäuse 2 hält. Die Halteschelle 41 ist mit dem Gehäuse 2, insbesondere über mindestens eine Schraubverbindung 45, 45' fest verbunden. Im bevorzugten Ausführungsbeispiel sind zwei Schraubverbindungen 45, 45' zur Befestigung der Halteschelle 41 an dem Gehäuse 2 vorgesehen. Die Halteschelle 41 ist im bevorzugten Ausführungsbeispiel ein bezüglich des Gehäuses 2 separat ausgebildetes Bauteil. In einer alternativen Ausgestaltung des Arbeitsgerätes 1 kann es auch vorgesehen sein, dass die Halteschelle 41 an dem Gehäuse 2 ausgebildet ist, also in der Gehäusegeometrie integriert ist, insbesondere einteilig mit dem Gehäuse 2 ausgebildet ist. Die Halteschelle 41 umgreift den Flansch 8, wobei zwischen der Halteschelle 41 und dem Flansch 8 mindestens ein Dämpferelement 42, 42' vorgesehen ist. Durch das mindestens eine Dämpferelement 42, 42' sind das Gehäuse 2 und der Elektromotor 3 hinsichtlich der Übertragung von Schwingungen entkoppelt. In der bevorzugten Ausführung sind zwei Dämpferelemente 42, 42' zwischen der Halteschelle 41 und dem Flansch 8 angeordnet. Die Dämpferelemente 42, 42' sind ringförmig. Die Dämpferelemente 42, 42' sind bevorzugt aus einem Elastomer gebildet. Die Halteschelle 41 ist bevorzugt zweiteilig ausgebildet, wobei die Schellenhälften 43, 43' bevorzugt über Rastverbindungen 44, 44' miteinander verbunden sind (Figuren 2 und 4).

Wie in Fig. 2 gezeigt, ist die Rotorwellenlagerung 9 in dem Flansch 8 des Arbeitsgerätes 1 angeordnet. Im Ausführungsbeispiel sind das erste Lager 16 und das zweite Lager 17 als Kugellager ausgebildet. Die Lager 16, 17 umfassen jeweils einen Innenring 32, 32' und einen Außenring 33, 33'. Der Außenring 33 des ersten Lagers 16 stützt sich in Richtung zum ersten Ende 28 der Rotorwelle 4 hin an einer Schulter 34 des Flansches 8 ab. Zwischen dem Außenring 33 des ersten Lagers 16 und dem Außenring 33' des zweiten Lagers 17 ist ein Abstandsring 35 angeordnet. In Richtung zum zweiten Ende 29 der Rotorwelle 4 hin ist der Außenring 33' des zweiten Lagers 17 an einem Sicherungsring 36 abgestützt. Der Innenring 32 des ersten Lagers 16 ist in Richtung zum ersten Ende 28 der Rotorwelle 4 hin gegen einen Sicherungsring 37 abgestützt. Der Innenring 32' des zweiten Lagers 17 ist in Richtung zum zweiten Ende 29 der Rotorwelle 4 gegen einen Haltering 38 abgestützt. Der Haltering 38 ist auf der Rotorwelle 4 aufgepresst. Zwischen dem Innenring 32 des ersten Lagers 16 und der Rotorwelle 4 ist ein Dichtungsring 39 angeordnet. Zwischen dem Innenring 32' des zweiten Lagers 17 und der Rotorwelle 4 ist ebenfalls ein Dichtungsring 39' angeordnet. Die Dichtungsringe 39, 39' liegen jeweils in einer Nut 40, 40' der Rotorwelle 4, wobei die Dichtungsringe 39, 39' derart ausgebildet sind, dass diese sowohl die Rotorwelle 4 als auch den Innenring 32, 32' kontaktieren. Der Dichtungsring 39, 39' ist bevorzugt ein O-Ring. Durch den Dichtungsring 39. 39' erhöht sich die Reibung zwischen den Innenringen 39, 39' und der Rotorwelle 4. Dadurch wird das Mitdrehen der Innenringe 39, 39' auf der Rotorwelle 4 begünstigt. Somit können Mikrorelativbewegungen und der daraus resultierende Passungsrost zwischen den Innenringen 32, 32' der Lager 16, 17 und der Rotorwelle 4 vermieden werden. Wie in Fig. 2 gezeigt, ist die Rotorwelle 4 vollständig in der im Flansch 8 angeordneten Rotorwellenlagerung 9 gelagert.

Wie in Fig. 2 gezeigt, erstreckt sich die Aufnahme 6 der Rotorwelle 4 in Richtung der Rotorachse 5 von dem ersten Ende 28 der Rotorwelle 4 mindestens bis in den Lagerungsabschnitt 18. Die Abtriebswelle 10 erstreckt sich in Richtung der Rotorachse 5 über das erste Ende 28 der Rotorwelle 4 mindestens bis in den Lagerungsabschnitt 18. Die Abtriebswelle 10 ist im Ausführungsbeispiel derart an der Rotorwelle 4 befestigt, dass die Abtriebswelle 10 in Richtung der Rotorachse 5 überlappend mit dem Lagerungsabschnitt 18 ausgebildet ist. Vorzugsweise überlappt die Abtriebswelle 10 den Lagerungsabschnitt 18 um mindestens 20%, vorzugsweise mindestens 30%, insbesondere mindestens 40% einer Länge 1 des Lagerungsabschnittes 18 in Richtung der Rotorachse 5.

Wie in Fig. 2 gezeigt, ist der Schaft 21, indem die Abtriebswelle 10 drehend gelagert ist, an dem Flansch 8 befestigt. Der Flansch 8 umfasst zwei Enden 48, 49, wobei an dem einen Ende 48 der Schaft 21 aufgenommen ist und an dem anderen Ende 49 die Rotorwellenlagerung 9 ausgebildet ist. Wie in Fig. 4 gezeigt, ist der Flansch 8 an seinem einen Ende 48 zumindest teilweise in Richtung der Rotorachse 5 geschlitzt ausgebildet. Durch den Schlitz 50 des Flansches 8 kann der Flansch 8 an seinem einen Ende 48 derart gespreizt werden, dass der Schaft 21 in den Flansch 8 eingeschoben werden kann. Ferner ist an dem einen Ende 48 des Flansches 8 eine Schraubverbindung 51 ausgebildet. Die Schraubverbindung 51 ist derart auf dem Flansch 8 angeordnet, dass sich beim Anziehen der Schraubverbindung 51 der Schlitz 50 verengt und der Schaft 21 in dem Flansch 8 eingespannt wird. Im Bereich des Lagerungsabschnittes 18 ist der Flansch 8 nicht geschlitzt. Dadurch bildet der Flansch 8 für die Rotorwellenlagerung 9 einen steifen Lagersitz.

Wie in Fig. 4 gezeigt, umfasst der Stator 12 einen Halterahmen 52. Der Stator 12 ist mit seinem Halterahmen 52 an dem Flansch 8 befestigt. Der Stator 12 ist mit dem Flansch 8 starr verbunden. Der Halterahmen 52 des Stators 12 ist über mehrere Schraubverbindungen 53 an dem Flansch 8 befestigt. Zudem umfasst das Arbeitsgerät 1 ein Lüftergehäuse 54, wobei das Lüftergehäuse 54 das Lüfterrad 15 umgibt. Das Lüftergehäuse 54 ist ebenfalls an dem Flansch 8 befestigt. Im Ausführungsbeispiel sind der Halterahmen 52 und das Lüftergehäuse 54 über dieselben Schraubverbindungen 53 auf dem Flansch 8 befestigt. In bevorzugter Ausführungsform des Arbeitsgerätes 1 ist das Lüftergehäuse 54 neben dem Flansch 8 über weitere, nicht näher dargestellte Befestigungselemente an dem Gehäuse 2 des Arbeitsgerätes befestigt. Die Befestigungselemente sind vorzugsweise als Antivibrationselemente ausgebildet.

Nachfolgend ist die Montage einer Baugruppe 55 (Fig. 4) des Arbeitsgerätes 1 beschrieben, die als vormontierte Einheit an dem Gehäuse 2 des Arbeitsgerätes 1 befestigt werden kann.

In einem ersten Montageschritt wird die Rotorwellenlagerung 9 in den Flansch 8 eingesetzt. Das erste Lager 16 wird in den Flansch 8 über sein anderes Ende 49 eingeführt und gegen die Schulter 34 des Flansches 8 gedrückt. Anschließend wird der Abstandsring 35 und darauffolgend das zweite Lager 17 gegen den Außenring 33 des ersten Lagers 16 geschoben. Die Lager 16, 17 werden über den Sicherungsring 36 in dem Flansch 8 fixiert.

In einem zweiten Montageschritt wird der Rotor 11 in die Rotorwellenlagerung 9 eingeschoben. Zuvor ist selbstverständlich der Dauermagnet 13 auf der Rotorwelle 4 zu befestigen. Benachbart zum Dauermagneten 13 dem ersten Ende 28 der Rotorwelle 4 zugewandt, wird der Haltering 38 auf die Rotorwelle 3 aufgepresst. Anschließend werden die Dichtungsringe 39, 39' in die Nuten 40, 40' der Rotorwelle 4 eingesetzt. Die Rotorwelle 4 wird mit ihrem ersten Ende 28 voran in die Rotorwellenlagerung 9 eingeschoben, bis der Haltering 38 an dem Innenring 32' des zweiten Lagers 17 anschlägt. Demnach bildet der Haltering 38 einen Montageanschlag für die Rotorwelle 4. Die Innenringe 32, 32' der Lager 16, 17 bilden mit der Rotorwelle 4 eine Spielpassung, so dass die Rotorwelle 4 in die Rotorwellenlagerung 9 eingeschoben werden kann. Anschließend wird über das eine Ende 48 des Flansches 8 der Sicherungsring 37 an der Rotorwelle 4 eingesetzt, so dass die Rotorwelle 4 über die Innenringe 32, 32' beider Lager 16, 17 fixiert ist.

Anschließend wird der Stator 12 und das Lüftergehäuse 54 mit dem Flansch 8 verschraubt. Das Lüftergehäuse 54 umfasst ein Grundgehäuse 56 und einen Lüfterdeckel 57. Bevor der Lüfterdeckel 57 mit dem Grundgehäuse 56 verschraubt werden kann, ist das Lüfterrad 15 an dem zweiten Ende 29 der Rotorwelle 4 zu montieren. Das Lüfterrad 15 wird hierfür auf das Ende 29 der Rotorwelle 4 gegen den Dauermagneten 13 geschoben und mit einem Sicherungsring 47 fixiert. Anschließend wird der Lüfterdeckel 57 auf das Grundgehäuse 56 geschraubt.

Zuletzt wird die Halteschelle 41 mit den Dämpferelementen 42, 42' auf dem Flansch 8 befestigt. Nun kann die vormontierte Baugruppe 55 in das Gehäuse 2 eingesetzt werden und befestigt werden. Abschließend ist der Schaft 21 mit der Abtriebswelle 10 in den Flansch 8 einzuschieben und über die Schraubverbindung 51 zu fixieren. Damit die Abtriebswelle 10 in die Aufnahme 6 der Rotorwelle 4 gleitet, ist an dem einen Ende des Schaftes 21 ein Führungselement 58 vorgesehen. Das Führungselement 58 weist einen reduzierten Öffnungsdurchmesser auf, wobei an dem Führungselement 59 zur Zentrierung der Rotorwelle 4 eine Fase 59 vorgesehen ist.

Wie in Fig. 3 gezeigt, umfasst der Elektromotor 3 ein Luftleitelement 60. Das Luftleitelement 60 ist in Richtung der Rotorachse 5 zwischen dem Flansch 8 und dem Stator 12 angeordnet. Das Luftleitelement 60 ist mit dem Stator 12 fest verbunden. Das Luftleitelement 60 ist derart ausgebildet, dass der vom Lüfterrad 15 angesaugte Kühlluftstrom gezielt auf die Spulen 14 des Stators 12 geleitet wird, um diese im Betrieb des Elektromotors 3 zu kühlen.

Wie auch in Fig. 4 gezeigt, umfasst der Flansch 8 neben einem hohlzylindrischen Abschnitt 61, indem der Schaft 21 und die Rotorwellenlagerung 9 aufgenommen sind, einen äußeren Ringabschnitt 62. Der äußere Ringabschnitt 62 umgibt den hohlzylindrischen Abschnitt 61 und ist in Richtung der Rotorachse 5 im Bereich der Rotorwellenlagerung 9 vorgesehen. Der Ringabschnitt 62 ist aus einem Ring 63 gebildet, der wiederum über mehrere Strömungsleitelemente 64 mit dem hohlzylindrischen Abschnitt 61 verbunden ist. Der hohlzylindrische Abschnitt 61, der Ring 63 sowie zwei zueinander benachbarte Strömungsleitelemente 64 bilden jeweils eine Strömungsöffnung 65 des Flansches 8, durch die ein Kühlluftstrom vom Lüfterrad 15 angesaugt strömen kann.

Wie in Fig. 4 gezeigt, ist das Luftleitelement 60 auf dem äußeren Ringabschnitt 62 des Flansches 8 aufgesteckt. Demnach ist das Luftleitelement 60 zwischen dem Flansch 8 und dem Stator 12 angeordnet. Das Luftleitelement 60 weist ebenfalls ein weiteres Strömungsleitelement 66 auf, wobei das Strömungsleitelement 66 derart ausgebildet ist, dass der durch die Strömungsöffnung 65 zum Luftleitelement 60 strömende Kühlluftstrom radial zur Rotorachse 5 hin komprimiert wird. Ferner weist das Luftleitelement 60 eine weitere Strömungsöffnung 67 auf, die in Richtung radial zur Rotorachse 5 auf Höhe der Spulen 14 des Stators 12 liegen. Somit wird der Kühlluftstrom durch das Luftleitelement 60 gebündelt und gezielt auf die Spulen 14 des Stators 12 gelenkt.

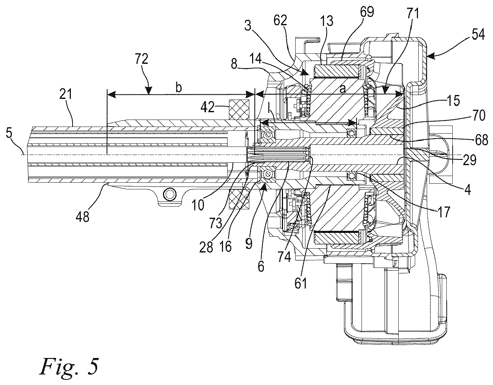

In Fig. 5 ist eine alternative, erfindungsgemäße Ausführung des Arbeitsgerätes 1 gezeigt. Gleiche Bezugszeichen bezeichnen die gleichen Bauteile der verschiedenen Ausführungen. Während in der Ausführung des Arbeitsgerätes 1 gemäß den Figuren 2 bis 4 der Elektromotor 3 als "Innenläufer" ausgebildet ist, zeigt die Figur 5 eine ebenfalls erfindungsgemäße weitere Ausführung des Elektromotors 3 als "Außenläufer". Nachfolgend ist im Wesentlichen der Unterschied der weiteren Ausführungsform gegenüber der Ausführung nach den Figuren 2 bis 4 beschrieben.

Wie in Fig. 5 gezeigt, ist der Dauermagnet 13 über den Befestigungsabschnitt 68 der Rotorwelle 4 lediglich mittelbar auf der Rotorwelle 4 gehalten. Auf dem Befestigungsabschnitt 68 ist das Lüfterrad 15 angeordnet. Der Befestigungsabschnitt 68 ist wie bei der Ausführung des Arbeitsgerätes 1 gemäß Figur 2 axial abseits des Lagerungsabschnittes 18 vorgesehen. Der Dauermagnet 13 liegt hingegen in Richtung der Drehachse 5 zumindest teilweise im Lagerungsabschnitt 18. Im bevorzugten Ausführungsbeispiel sitzt das Lüfterrad 15 auf einem Adapterelement 70, wobei das Adapterelement 70 wiederum auf dem Befestigungsabschnitt 68 befestigt ist. Das Adapterelement 70 ist vorzugsweise eine Hülse. In einer alternativen Ausführung kann es vorgesehen sein, dass das Lüfterrad 15 auch unmittelbar auf dem Befestigungsabschnitt 68 der Rotorwelle 4 vorgesehen ist. Das Lüfterrad 15 ist ebenfalls an dem zweiten Ende 29 der Rotorwelle 4 befestigt. Das Lüfterrad 15 ist drehsicher mit der Rotorwelle 4 verbunden. Das Lüfterrad 15 weist umfangsseitig einen zylindrischen Halteabschnitt 69 auf, wobei sich der Halteabschnitt 69 in Richtung der Drehachse 5 der Rotorwelle 4 vom Grundkörper des Lüfterrads 15 zur Rotorlagerung 9 erstreckt. An dem zylindrischen Halteabschnitt 69 ist der Dauermagnet 13 befestigt. Der Dauermagnet 13 ist auf der Innenseite, also der dem Stator 12 zugewandten Seite des Halteabschnitts 69 angeordnet. Der Dauermagnet 13 liegt bezogen auf die Drehachse 5 der Rotorwelle 4 radial außerhalb des Stators 12, insbesondere außerhalb der Spulen 14 des Stators 12.

Wie in Fig. 5 gezeigt, ist der Stator 12 mit dem Flansch 8 fest verbunden. Der Stator 12 ist auf der Außenseite des hohlzylindrischen Abschnitts 61 des Flansches 8 angeordnet. Der Stator 12 ist mit dem Flansch 8 fest verbunden. Demnach ist der Stator 12 umfangsseitig auf dem Flansch 8 befestigt, während in der Ausführung des Arbeitsgerätes 1 nach den Figuren 2 bis 4 der Stator 12 stirnseitig an dem Flansch 8 befestigt ist. Das Lüftergehäuse 54 ist unmittelbar an dem Flansch 8, insbesondere an dem äußeren Ringabschnitt 62 des Flansches 8 befestigt. Die Rotorwelle 4 ist bevorzugt vollständig als Hohlwelle ausgebildet.

Wie in den Figuren 2 und 5 gezeigt, umfasst die Aufnahme 6 der Rotorwelle 4 in Richtung der Drehachse 5 ein erstes Ende 73 und ein zweites Ende 74. Der Abstand zwischen dem ersten Ende 73 der Aufnahme 6 und dem zweiten Ende 29 der Rotorwelle 4 ist größer als der Abstand zwischen dem zweiten Ende 74 der Aufnahme 6 und dem zweiten Ende 29 der Rotorwelle 4. Ferner umfasst das Arbeitsgerät 1 einen Motorabschnitt 71 und einen Halteabschnitt 72. Der Motorabschnitt 71 weist eine Länge a auf, wobei die Länge a dem Abstand des ersten Endes 73 der Aufnahme 6 und dem zweiten Ende 29 der Rotorwelle 4 entspricht. Der Halteabschnitt 72 entspricht dem Bereich des Flansches 8, in dem die Abtriebswelle 10 im Flansch 8 aufgenommen ist. Der Halteabschnitt 72 weist eine Länge b auf, wobei die Länge b dem Abstand des einen Endes 48 des Flansches 8 und dem ersten Ende 73 der Aufnahme 6 entspricht.

Das Arbeitsgerät 1 ist derart ausgebildet, dass die Länge a des Motorabschnittes 71 höchstens dem 2,5fachen der Länge b des Halteabschnittes 72 entspricht. Hierdurch wird deutlich, dass die Antriebseinheit des Arbeitsgerätes 1 einen sehr kompakten Aufbau besitzt. Besonders bevorzugt entspricht die Länge a des Motorabschnittes 71 höchstens dem 2fachen, insbesondere höchstens dem 1,6fachen der Länge b des Halteabschnittes 72.

## Patentansprüche

1. Arbeitsgerät,
umfassend
- ein Gehäuse (2),
- einen im Gehäuse (2) angeordneten Elektromotor (3), wobei der Elektromotor (3) eine um eine Rotorachse (5) drehend angetriebene Rotorwelle (4) umfasst,
- eine Abtriebswelle (10) zum Antreiben eines Werkzeugs,
- wobei die Abtriebswelle (10) an einer Aufnahme (6) der Rotorwelle (4) mit der Rotorwelle (4) formschlüssig verbunden ist,
- einen am Gehäuse (2) abgestützten Flansch (8),
**dadurch gekennzeichnet, dass** die Rotorwelle (4) über eine im Flansch (8) angeordnete Rotorwellenlagerung (9) drehbar gelagert ist, wobei sich die Rotorwellenlagerung (9) in Richtung der Rotorachse (5) entlang eines Lagerungsabschnittes (18) erstreckt, und dass sich die Abtriebswelle (10) mindestens bis in den Lagerungsabschnitt (18) der Rotorwellenlagerung (9) erstreckt.

2. Arbeitsgerät nach Anspruch 1, **dadurch gekennzeichnet, dass** sich der Lagerungsabschnitt (18) in Richtung der Rotorachse (5) über eine Länge (1) erstreckt, wobei die Abtriebswelle (10) den Lagerungsabschnitt (18) in Richtung der Rotorachse (5) um mindestens 20% der Länge (1) des Lagerungsabschnittes (18) überlappt.

3. Arbeitsgerät nach Anspruch 1 oder 2, **dadurch gekennzeichnet, dass** die Aufnahme (6) einteilig mit der Rotorwelle (4) ausgebildet ist.

4. Arbeitsgerät nach einem der Ansprüche 1 bis 3, **dadurch gekennzeichnet, dass** die Aufnahme (6) der Rotorwelle (4) Teil einer Polygonverbindung ist.

5. Arbeitsgerät nach einem der Ansprüche 1 bis 4, **dadurch gekennzeichnet, dass** die Rotorwellenlagerung (9) als eine fliegende Lagerung ausgebildet ist.

6. Arbeitsgerät nach einem der Ansprüche 1 bis 5, **dadurch gekennzeichnet, dass** die Rotorwellenlagerung (9) ein erstes Lager (16) und ein zweites Lager (17) umfasst, wobei das erste Lager (16) und das zweite Lager (17) in Form einer Spielpassung auf der Rotorwelle (4) gehalten sind.

7. Arbeitsgerät nach Anspruch 6, dass zwischen den Lagern (16, 17) der Rotorwellenlagerung (9) und der Rotorwelle (4) ein O-Ring angeordnet ist.

8. Arbeitsgerät nach Anspruch 6 oder 7, **dadurch gekennzeichnet, dass** die Lager (16, 17) als Kugellager ausgebildet sind.

9. Arbeitsgerät nach einem der Ansprüche 1 bis 8, **dadurch gekennzeichnet, dass** sich die Rotorwelle (4) von einem ersten Ende (28) bis zu einem zweiten Ende (29) erstreckt, wobei die Aufnahme (6) an dem ersten Ende (28) der Rotorwelle (4) ausgebildet ist.

10. Arbeitsgerät nach Anspruch 9, **dadurch gekennzeichnet, dass** über einen Befestigungsabschnitt (68) der Rotorwelle (4) ein Dauermagnet (13) als Teil eines Rotors (11) des Elektromotors (3) auf der Rotorwelle (4) angeordnet ist, wobei die Rotorlwellenagerung (9) in Richtung der Rotorachse (5) zwischen dem ersten Ende (28) der Rotorwelle (4) und dem Befestigungsabschnitt (68) der Rotorwelle (4) angeordnet ist.

11. Arbeitsgerät nach Anspruch 9 oder 10, **dadurch gekennzeichnet, dass** am zweiten Ende (29) der Rotorwelle (4) ein Lüfterrad (15) angeordnet ist.

12. Arbeitsgerät nach einem der Ansprüche 1 bis 11, **dadurch gekennzeichnet, dass** ein Lüftergehäuse (54), das den Lüfter (15) umgibt, an dem Flansch (8) befestigt ist.

13. Arbeitsgerät nach einem der Ansprüche 1 bis 12, **dadurch gekennzeichnet, dass** der Elektromotor (3) einen Stator (7) umfasst, wobei der Stator (7) über den Flansch (8) am Gehäuse (2) abgestützt ist.

14. Arbeitsgerät nach einem der Ansprüche 1 bis 13, **dadurch gekennzeichnet, dass** der Flansch (8) über eine Halteschelle (41) am Gehäuse (2) befestigt ist.

15. Arbeitsgerät nach Anspruch 14, **dadurch gekennzeichnet, dass** zwischen dem Flansch (8) und der Halteschelle (41) mindestens ein Dämpferelement (42) vorgesehen ist.
